# EUROPÄISCHE PATENTANMELDUNG

(11) **EP 0 612 193 A2**
(43) Veröffentlichungstag der Anmeldung: **24.08.1994**
(21) Anmeldenummer: 94101949.9
(22) Anmeldetag: 09.02.1994
(51) Int. Cl.: H04Q 11/00

(54) **Optisches Fernmeldeortsnetz und optische Teilnehmervermittlungsstelle**

(30) Priorität: 13.02.1993 DE 4304346
(71) Anmelder: Alcatel SEL Aktiengesellschaft, D-70435 Stuttgart (DE)
(72) Erfinder: Böttle, Dietrich, D-73084 Salach (DE); Wahl, Stefan, D-71701 Schwieberdingen (DE); Bigalk, Uwe, D-71397 Leutenbach (DE); Veith, Gustav, Dr., D-75378 Bad Liebenzell (DE)
(74) Vertreter: Brose, Gerhard

(57) **Zusammenfassung**

Stand der Technik: Teilnehmer sind an Teilnehmervermittlungsstellen in der untersten Stufe eines hierarchischen Netzes angeschlossen.

Technisches Problem: Optische Vermittlungstechnik bei geringem Verkehrsaufkommen unwirtschaftlich. Teilnehmer haben nur sehr geringes Verkehrsaufkommen.

Grundgedanke: Anschluß der Teilnehmer nur über Einrichtungen, die das Verkehrsaufkommen bündeln.

Beispiel: Dezentraler Anschluß der Teilnehmer an optische Ringleitungen.

## Beschreibung

Die Erfindung betrifft ein optisches Fernmeldenetz nach dem Oberbegriff des Anspruchs 1 und eine optische Teilnehmervermittlungsstelle nach dem Oberbegriff von Anspruch 4.

Das derzeitige Fernmeldenetz ist hierarchisch gegliedert. Jeder Teilnehmer ist an genau einer Teilnehmervermittlungsstelle angeschlossen. Die Teilnehmervermittlungsstellen sind direkt oder über Vermittlungsstellen höherer Hierarchiestufen (Netzebenen) miteinander verbunden. Auch in höheren Hierarchiestufen sind die Vermittlungsstellen zum Teil direkt miteinander verbunden, zum Teil wiederum über die übergeordneten Hierarchiestufen. Direktverbindungen sind immer dort vorgesehen, wo dies vom Verkehrsaufkommen her gerechtfertigt ist. Verbindungen von Vermittlungsstellen untereinander sind deshalb immer Verbindungen höherer Kapazität, insbesondere mehrkanalige Verbindungen.

Die Verbindungen der Vermittlungsstellen untereinander sind schon heute nicht immer drahtgebunden. Hier wird teilweise von der optischen Übertragungstechnik Gebrauch gemacht. Auch im Teilnehmeranschlußbereich soll die optische Übertragungstechnik eingesetzt werden. Dabei wird in der Regel die Tatsache ausgenutzt, daß eine Glasfaser Information einer Vielzahl von Verbindungen unabhängig voneinander zu übertragen vermag. Derartige Konzepte basieren meist auf Verteildiensten für Rundfunk und Fernsehen, wobei dann die immer noch nicht ganz ausgelasteten Übertragungswege zu den Teilnehmern durch die vermittelten Dienste mitverwendet werden.

Es sind auch schon Lösungen für optische Vermittlungsstellen bekannt, bei denen optische Signale gezielt zu einem ganz bestimmten Ausgang hin vermittelt werden. Das Vermitteln erfolgt dabei durch Umsetzen der Wellenlänge, durch Verändern der Zeitlage und durch räumliches Umsetzen auf eine von mehreren Abnehmerleitungen.

Der Vorteil der optischen Vermittlungs- und Übertragungstechnik liegt in der extrem hohen Übertragungskapazität optischer Bauelemente und Leitungen. Ein wirtschaftlicher Einsatz ist aber nur dort möglich, wo diese hohe Übertragungskapazität auch genutzt wird. Eine weitere Voraussetzung für einen wirtschaftlichen Einsatz ist, daß die erforderlichen Einrichtungen in hohen Stückzahlen gebraucht werden. Dem stehen die herkömmlichen, für elektrische Signale verwendeten Netzstrukturen entgegen. Die höchsten Stückzahlen treten dort auf, wo die Endteilnehmer an die Teilnehmervermittlungsstelle angeschlossen sind. Gerade dort sind aber die geringsten Verkehrsdichten.

Die Erfindung schafft hier Abhilfe durch ein optisches Fernmeldeortsnetz nach der Lehre des Anspruchs 1 und eine optische Teilnehmervermittlungsstelle nach der Lehre des Anspruchs 4. Vorteilhafte Ausgestaltungen der Erfindung sind den Unteransprüchen zu entnehmen.

Gemäß der Erfindung erfolgt also der Anschluß der Teilnehmer an die Teilnehmervermittlungsstelle grundsätzlich nur über Einrichtungen, die das Verkehrsaufkommen bündeln. Beispiele sind der dezentrale Anschluß der Teilnehmer an optische Ringleitungen und der Einsatz von Konzentratoren.

Es wird also vom bisherigen Grundsatz abgegangen, die Teilnehmer einzeln an die Teilnehmervermittlung anzuschließen. Es gibt auch jetzt schon Fälle, in denen Teilnehmer nur gruppenweise an die Teilnehmervermittlungsstelle angeschlossen sind. Beispiele sind Teilnehmer von Nebenstellenanlagen oder Teilnehmer, die an ein Local Area Network angeschlossen sind. Auch die Verwendung von Konzentratoren ist bekannt. Diese Beispiele sind aber bei herkömmlichen Netzstrukturen die Ausnahme und nicht die Regel. Auch haben sie oft primär eine andere Aufgabe, nämlich die der Schaffung von Internverbindungsmöglichkeiten. Abgesehen von sehr großen Nebenstellenanlagen erfolgt bei diesen beispielhaft genannten Fällen der Anschluß an die Teilnehmervermittlungsstelle nach Art einzelner Teilnehmeranschlüsse.

Eine erfindungsgemäße Teilnehmervermittlungsstelle zeichnet sich also dadurch aus, daß alle ihre Anschlüsse, wie bei einer Vermittlungsstelle der höheren Hierarchiestufen, hinsichtlich ihres Verkehrsaufkommens gleichwertig sind. Sie unterscheiden sich möglicherweise, wie auch bei herkömmlichen Vermittlungsstellen, dadurch, daß sie für unterschiedliche Normen (analog, digital, STM, ATM) ausgelegt sind. Sie unterscheiden sich jedenfalls dadurch voneinander, daß die Signalisierung an den zu den Teilnehmern führenden Anschlüssen gänzlich anders ist als an den zu anderen Vermittlungsstellen führenden Anschlüssen.

Im folgenden wird die Erfindung anhand eines Ausführungsbeispiels unter Zuhilfenahme der bei liegenden Zeichnungen weiter erläutert.
- Figur 1: zeigt ein erfindungsgemäß aufgebautes optisches Fernmeldeortsnetz.
- Figur 2: zeigt eine Anschlußeinheit zum Anschluß einer Teilnehmereinrichtung an eine optische Ringleitung.
- Figur 3: zeigt eine Adreßerkennungsschaltung für die Anschlußeinheit nach Figur 2.

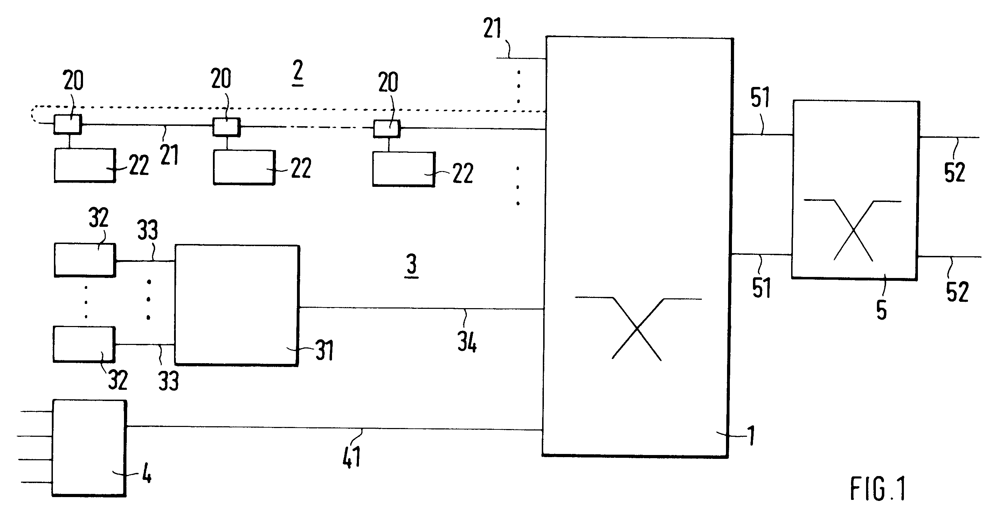

Figur 1 zeigt ein optisches Fernmeldeortsnetz mit einer optischen Teilnehmervermittlungsstelle 1. Weiter zeigt Figur 1 ein optisches Ringleitungsnetz 2, ein Teilnetz 3, eine Netzanschlußeinheit 4 eines Teilnehmers mit hohem Verkehrsaufkommen und einen Schaltverteiler ("Cross Connect") 5.

Das optische Ringleitungsnetz 2 weist Anschlußeinheiten 20, Lichtwellenleiter 21 und Teilnehmereinrichtungen 22 auf. Die Lichtwellenleiter 21 bilden eine von der Teilnehmervermittlungsstelle 1 ausgehende und wieder zu dieser zurückkehrende, die Anschlußeinheiten 20 mit der Teilnehmervermittlungsstelle 1 verbindende Ringleitung. Ein weiterer Lichtwellenleiter 21 sowie einige Wiederholungspunkte in Figur 1 deuten an, daß noch mehrere Ringleitungsnetze an der Teilnehmervermittlungsstelle angeschlossen sind.

Das Teilnetz 3 weist einen Konzentrator 31 und eine Mehrzahl von Teilnehmereinrichtungen 32 auf. Die Teilnehmereinrichtungen 32 sind durch Lichtwellenleiter 33 mit dem Konzentrator 31 verbunden; dieser ist mittels eines Lichtwellenleiters 34 mit der Teilnehmervermittlungsstelle 1 verbunden.

Die Netzanschlußeinheit 4 gleicht prinzipiell dem Konzentrator 31 des Teilnetzes 3. Die daran angeschlossenen Teilnehmereinrichtungen, die in Figur 1 nicht dargestellt, sondern nur durch Anschlußleitungen angedeutet sind, gehören jedoch alle demselben Teilnehmer, weshalb auch die Netzanschlußeinheit 4 teilnehmerindividuell ist. Sie ist deshalb in Figur 1 auch symbolisch unter die ebenfalls teilnehmerindividuellen Teilnehmereinrichtungen 32 des Teilnetzes 3 und damit weiter weg von der Teilnehmervermittlungsstelle 1 gezeichnet als der für viele Teilnehmer gemeinsame Konzentrator 31. Der Verbindung der Netzanschlußeinheit 4 mit der Teilnehmervermittlungsstelle 1 dient ein Lichtwellenleiter 41.

Außer mit den Teilnehmereinrichtungen ist die Teilnehmervermittlungsstelle mit anderen Teilnehmervermittlungsstellen und mit Vermittlungsstellen in höheren Hierarchiestufen verbunden. Hierzu dienen Lichtwellenleiter 52, die im vorliegenden Fall nicht direkt, sondern über den Schaltverteiler 5 und weitere Lichtwellenleiter 51 an die Teilnehmervermittlungsstelle angeschlossen sind.

Die einzelnen in Figur 1 gezeigten Einrichtungen sind für sich dem Fachmann im wesentlichen bekannt. Auch die Steuerung und die dafür erforderliche Signalisierung ist prinzipiell bekannt, unterscheidet sich aber von bekannten Vermittlungsstellen insbesondere dadurch, daß die gesamte teilnehmerindividuelle Signalisierung die Grenze der Teilnehmervermittlungsstelle überschreitet und nicht nur diejenige Signalisierung, die zur Teilnehmereinrichtung selbst gelangt oder von dieser kommt. Die in herkömmlichen Teilnehmervermittlungsstellen enthaltenen Teilnehmeranschlußschaltungen tauschen eine Vielzahl von Meldungen mit der (zentralen oder dezentralen) Steuerung der Vermittlungsstelle aus, die den Belegungszustand oder die Auswahl einer Teilnehmereinrichtung, die Funktionsprüfung einer Teilnehmereinrichtung und ähnliches betreffen. Derartige Meldungen können bei erfindungsgemäßer Ausgestaltung der Teilnehmervermittlungsstelle nicht ausschließlich innerhalb dieser verlaufen sondern müssen nach außen gehen oder von außen kommen. Inhaltlich kann die Signalisierung aber unverändert bleiben, weshalb hier nicht besonders darauf eingegangen werden muß.

Nur als Beispiel dafür, daß Einrichtungen zur Vermittlung optischer Signale an sich bekannt sind, wird hier auf die US-Patente 5,111,323, 4,811,210 und 4,789,964 verwiesen. Dort werden ein komplettes optisches Vermittlungssystem mit daran angeschlossenen Teilnehmereinrichtungen, ein optischer Koordinatenschalter und ein optisches Speichersystem beschrieben. Mit den beschriebenen Einrichtungen zur Zeit lagen- und Raumlagenumsetzung können alle in der herkömmlichen Vermittlungstechnik für elektrische Signale bekannten Strukturen von vermittelnden Einrichtungen zusammengestellt werden.

Die Teilnehmervermittlungsstelle 1 unterscheidet sich erfindungsgemäß in der Koppelnetzstruktur nicht von einer Durchgangsvermittlungsstelle. Sie weist keine Einzelanschlüsse für Teilnehmereinrichtungen auf. Als Koppelnetzstruktur kommt jede beliebige Struktur in Frage, die auch für Durchgangsvermittlungsstellen in Frage kommt. Als Koppeleinrichtungen werden jedoch optische Koppeleinrichtungen, z.B. nach den oben genannten US-Patenten, verwendet. Wo in elektrischen Koppelnetzen Speicher zur Zeitlagenumsetzung verwendet werden, müssen im optischen Koppelnetz entweder ebenfalls Speicher, natürlich für optische Signale, oder Wellenlängenumsetzer verwendet werden, weil im optischen Bereich Zeitlagenumsetzungen ganz oder teilweise durch Wellenlängenumsetzungen ersetzbar sind. Die Einrichtungen zur Steuerung sind dieselben wie die Einrichtungen zur Steuerung einer elektrischen Vermittlungsstelle gleicher Struktur. Sie können auch, wenn die entsprechenden optischen logischen Elemente wirtschaftlich einsetzbar sind, aus solchen aufgebaut sein. Wo Steuersignale aus den zu vermittelnden Datenströmen auszukoppeln oder in diese einzufügen sind, sind optoelektrische bzw. elektrooptische Wandler erforderlich.

Die Netzanschlußeinheit 4 und der Konzentrator 31 sind grundsätzlich gleich aufgebaut. Sie sind einstufige Vermittlungsstellen, deren Aufbau dem Aufbau einer Stufe der Teilnehmervermittlungsstelle 1 entspricht. Sie werden so betrieben, daß an den Anschlüssen für Teilnehmereinrichtungen jeweils nur die für diese Teilnehmereinrichtung bestimmte oder von dieser kommende Information auftritt, während an dem der Teilnehmervermittlungsstelle 1 zugeordneten Anschluß die Summe aller Informationen auftritt, sofern nicht Internverkehr zugelassen ist und auftritt. Da zu den Teilnehmereinrichtungen hin zwangsläufig die Verkehrsdichte geringer ist, können hier auch andere Normen verwendet werden. Die Netzanschlußeinheit 4 und der Konzentrator 31 können zu diesem Zweck auch noch Einrichtungen zur Wandlung zwischen elektrischen und optischen, vielleicht sogar auch zwischen digitalen und analogen Signalen aufweisen. Sie können auch mit herkömmlichen Teilnehmeranschlußschaltungen ausgerüstet sein.

Derzeit setzt sich auch in bestehenden Netzen die Verwendung von Schaltverteilern (cross-connects) durch. In diesen Schaltverteilern erfolgt keine verbindungsindividuelle Umschaltung. Es wird dabei bündelweise umgeschaltet, um Überlastungen einzelner Teile des Netzes auszugleichen. Solche Schaltverteiler werden auch in optischen Netzen verwendet werden. Der Schaltverteiler 5 braucht aber nicht sämtliche Möglichkeiten einer Vermittlungsstelle. Es genügt vielmehr eine einstufige Raum-Vermittlungseinrichtung, die auch mit optischen Elementen einfach aufzubauen ist. Zusätzliche Einrichtungen zur Wellenlängenumsetzung ermöglichen die separate Umschaltung auch kleinerer Bündel.

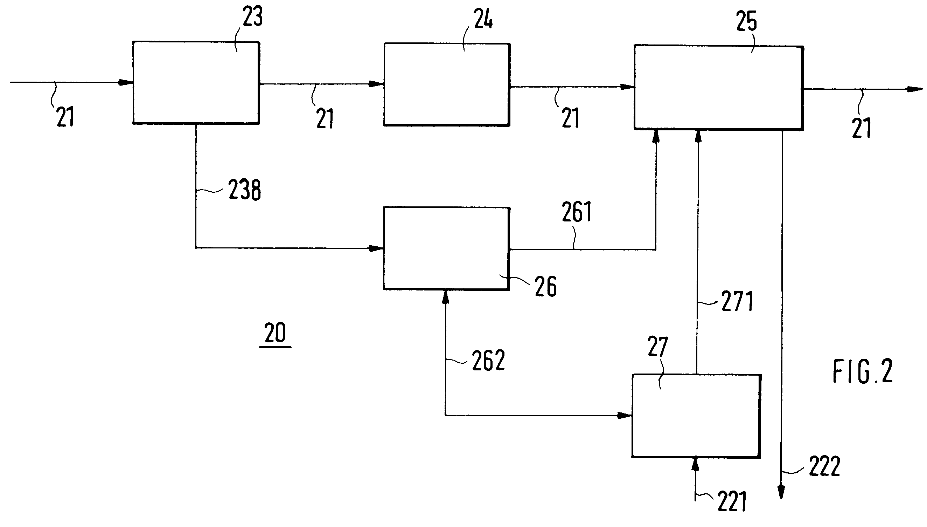

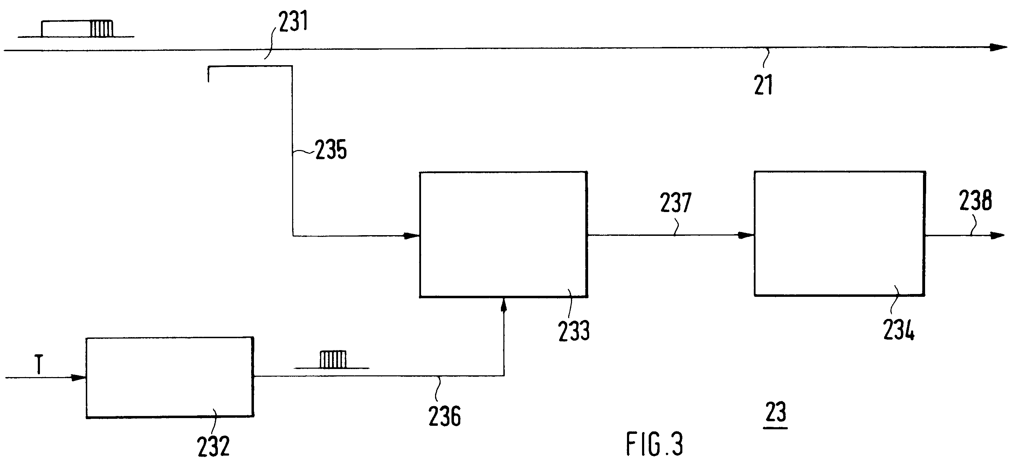

Anhand der Figuren 2 und 3 wird nun noch beispielhaft ein möglicher Aufbau einer Anschlußeinheit 20 beschrieben.

Die Anschlußeinheit 20 nach Figur 2 enthält eine Adreßerkennungsschaltung 23, eine optische Verzögerungsleitung 24, ein optisches Schaltelement 25, eine Steuerschaltung 26 und einen Zwischenspeicher 27.

Die Adreßerkennungsschaltung 23, die Verzögerungsleitung 24 und das Schaltelement 25 sind, in dieser Reihenfolge, in den durchgehenden Lichtwellenleiter 21 eingefügt. Zusätzlich kann noch ein optischer Verstärker oder Regenerator eingefügt sein.

Der Aufbau der Adreßerkennungsschaltung 23 wird unten anhand der Figur 3 noch näher erläutert werden. Die Adreßerkennungsschaltung 23 überwacht den optischen Datenstrom auf dem Lichtwellenleiter 21 daraufhin, ob darin eine Adresse enthalten ist, die erkennen läßt, daß der dieser Adresse nachfolgende Zeitabschnitt für die Anschlußeinheit 20 bestimmt ist. Aus diesem Zeitabschnitt sind dann entweder Daten für die angeschlossene Teilnehmereinrichtung 22 auszukoppeln oder von dieser Teilnehmereinrichtung kommende Daten in diesen Zeitabschnitt einzukoppeln oder auch beides. Entsprechende Meldungen werden auf einer Meldeleitung 238 an die Steuerschaltung 26 weitergegeben.

Die Steuerschaltung 26 steht mit dem Zwischenspeicher 27 über eine Steuer- und Meldeleitung 262 in Verbindung, kennt den Belegungszustand des Zwischenspeichers 27 und kann diesen veranlassen, über eine Datenleitung 271 Daten zum optischen Schaltelement 25 weiterzugeben. Gleichzeitig wird das optische Schaltelement über eine Steuerleitung 261 veranlaßt, diese Daten in den Datenstrom auf dem durchgehenden Lichtwellenleiter 21 einzufügen. Wird der Steuerschaltung 26 über die Meldeleitung 238 gemeldet, daß Daten aus dem durchgehenden Datenstrom zu entnehmen sind, so wird das optische Schaltelement 25 veranlaßt, diese auf eine abgehende Teilnehmerleitung 222 durchzuschalten.

Die optische Verzögerungsleitung 24 verzögert den Datenstrom auf dem durchgehenden Lichtwellenleiter 21 soweit, daß die Steuerschaltung 26 zusammen mit dem optischen Schaltelement 25 das zeitlich korrekte Einund Ausblenden von Daten veranlassen kann. Hierbei sind nicht nur Schaltzeiten der Steuerschaltung und des Schaltelements zu berücksichtigen, sondern vor allem auch die Tatsache, daß erst nach komplettem Durchgang einer Adresse durch die Adreßerkennungsschaltung 23 eine Funktion ausgelöst werden kann. Zumindest beim Einfügen von Daten in den durchgehenden Datenstrom müssen aber auch die zugehörigen Adressen mit eingefügt werden und diejenigen Adressen ersetzen, die dieses Einfügen ausgelöst haben.

Wenn hier Adressen genannt werden, dann sind damit all diejenigen Informationen gemeint, die nicht reine Nutzdaten sind, also der gesamte Paketkopf oder Header. Dieser Teil ist dann bei aus dem durchgehenden Datenstrom auszukoppelnden Daten auch mit auf die abgehende Teilnehmerleitung 222 auszukoppeln.

Üblicherweise werden in einer derartigen Anschlußeinheit nicht nur Daten für den oder die an diese Anschlußeinheit angeschlossenen Teilnehmer ausgeblendet, sondern auch Steuerdaten für die Steuereinheit selbst. Dies ist aber nicht erfindungsspezifisch und wird nicht näher ausgeführt. Entsprechendes gilt für Steuerdaten, die diese Anschlußeinheit abzusenden hat. Es wird hier angenommen, daß diese Steuerdaten zusammen mit den Daten des angeschlossenen Teilnehmers oder auch mehrerer angeschlossener Teilnehmer über eine ankommende Teilnehmerleitung 221 in den Zwischenspeicher 27 eingegeben werden.

Die Daten werden, zusammen mit den zugehörigen Adressen, im Zwischenspeicher 27 in elektrischer Form zwischengespeichert. Die Dimensionierung des Speichers erfolgt wie im Falle elektrischer Datenströme.

Das optische Schaltelement 25 ist ein übliches optisches Schaltelement mit zwei Eingängen, zwei Ausgängen und zwei Schaltzuständen, zwischen denen über einen Steuereingang umgeschaltet werden kann. Andere Ausführungsformen sind möglich.

Anhand der Figur 3 wird nun noch beispielhaft der Aufbau einer Adreßerkennungsschaltung 23 beschrieben.

Die Adreßerkennungsschaltung 23 weist einen Faserkoppler 231, einen Adreßcodegenerator 232, einen optischen oder optoelektrischen Korrelator 233 und eine Entscheidungsstufe 234 auf.

Durch den Faserkoppler 231 wird ein Teil des auf dem durchgehenden Lichtwellenleiter 21 übertragenen Lichts einschließlich der darin enthaltenen Information ausgekoppelt und über eine Leitung 235 dem Korrelator zugeführt.

Der Adreßcodegenerator 232 erzeugt den der Anschlußeinheit 20 zugeordneten Adreßcode und führt ihn über eine Leitung 236 dem Korrelator zu. Der Adreßcodegenerator 232 wird mit einem Takt T synchronisiert, der in bekannter Weise ebenfalls aus dem durchgehenden Datenstrom abgeleitet ist und die Zeitpunkte angibt, zu denen Adressen anfangen können.

Die Adreßerkennung erfolgt besonders einfach, wenn die Adresse in einem m-aus-n-Code codiert ist, beispielsweise in einem 2-aus-5-Code. Als Korrelator genügt dann ein einfacher optischer Schalter, der durch den Adreßcode geöffnet und geschlossen wird. Stimmen die über die Leitungen 235 und 236 den Korrelator erreichenden Adressen überein, so werden pro Ziffer m Impulse, hier also 2 Impulse über eine Leitung 237 zur Entscheidungsstufe 234 durchgelassen. In jedem Fall nicht übereinstimmender Adressen werden weniger Impulse durchgelassen. Die Entscheidungsstufe 234 ist ein optoelektrischer Wandler, dem ein Amplitudenbegrenzer, ein Integrator und eine Schwellwertschaltung folgen. Nur wenn sämtliche Ziffern der beiden zu vergleichenden Adressen übereinstimmen, spricht die Schwellwertschaltung an und zeigt das Vorliegen einer gültigen Adresse an. Ein entsprechendes Signal wird auf der Meldeleitung 238 abgegeben.

Werden zur Kennzeichnung auszublendender und einzukoppelnder Daten gänzlich verschiedene Adressen verwendet, so sind zwei gleichartige Adreßerkennungsschaltungen 23 erforderlich, deren Ergebnisse dann in einer teilweise gemeinsamen Entscheidungsstufe 234 zusammengefaßt werden. Wird dagegen so adressiert, daß die ersten Ziffern der Adressen in beiden Fällen gleich sind und die letzte Ziffer angibt, ob auszublenden oder einzukoppeln ist, so genügt es, wenn die Entscheidungsstufe die letzte Ziffer separat auswertet.

Die vorliegende Erfindung wurde hier nur beispielhaft beschrieben. Andere Realisierungsmöglichkeiten sind damit nicht ausgeschlossen. Dies gilt sowohl für die Detailrealisierung, die Adressierungsart, die synchrone oder asynchrone Betriebsweise, die Frage der Übergänge zwischen optischen und elektrischen Signalen wie auch vor allem die Struktur derjenigen Netzteile, die im Teilnehmerbereich das Verkehrsaufkommen bündeln. Nur beispielhaft seien hier gegenläufige Ringsysteme, aktive und passive Sternnetze und gegenläufige Bussysteme wie das DQDB-System (distributed queue dual bus) genannt. In der Regel, aber nicht zwingend, ist dabei auch Internverkehr möglich.

## Patentansprüche

1. Optisches Fernmeldeortsnetz mit einer optischen Teilnehmervermittlungsstelle (1), mit einer Vielzahl von Teilnehmereinrichtungen (22, 32) und mit Einrichtungen zur Verbindung der Teilnehmervermittlungsstelle mit anderen Teilnehmervermittlungsstellen und Vermittlungsstellen in höheren Hierarchiestufen, **dadurch gekennzeichnet,** daß die Teilnehmereinrichtungen derart zu Gruppen (2, 3, 4) zusammengefaßt sind, daß das Verkehrsaufkommen jeder Gruppe auf einen Anschluß an der Teilnehmervermittlungsstelle (1) konzentriert ist.

2. Fernmeldeortsnetz nach Anspruch 1, dadurch gekennzeichnet, daß die Teilnehmereinrichtungen (22) einer Gruppe (2) mittels einer optischen Ringleitung (21) an der Teilnehmervermittlungsstelle (1) angeschlossen sind.

3. Fernmeldeortsnetz nach Anspruch 1, dadurch gekennzeichnet, daß die Teilnehmereinrichtungen (32) einer Gruppe (3) mittels eines Konzentrators (31) an der Teilnehmervermittlungsstelle (1) angeschlossen sind.

4. Optische Teilnehmervermittlungsstelle (1) mit Einrichtungen zur Verbindung mit anderen Teilnehmervermittlungsstellen und Vermittlungsstellen in höheren Hierarchiestufen **dadurch gekennzeichnet,** daß Anschlüsse vorhanden sind, an die jeweils eine Gruppe (2, 3, 4) von Teilnehmereinrichtungen (22, 32) über gemeinsame Anschlußleitungen (21, 34, 41) anschließbar ist.
